Europäisches Patentamt

European Patent Office

Office européen des brevets

(19)

(11) **EP 1 158 352 A2**

(12) # DEMANDE DE BREVET EUROPEEN

(43) Date de publication:
**28.11.2001 Bulletin 2001/48**

(51) Int Cl.⁷: **G02F 2/02**, G02B 6/12, G02B 6/14

(21) Numéro de dépôt: **01401282.7**

(22) Date de dépôt: **17.05.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **23.05.2000 FR 0006548**

(71) Demandeur: **ALCATEL**
**75008 Paris (FR)**

(72) Inventeurs:
• **Shen, Alexandre**
**75013 Paris (FR)**
• **Devaux, Fabrice**
**92120 Montrouge (FR)**
• **Schlak, Michael**
**12107 Berlin (DE)**
• **Tekin, Tolga**
**13353 Berlin (DE)**

(74) Mandataire: **Brykman, Georges**
**c/o Brevalex**
**3, rue du Docteur Lancereaux**
**75008 Paris (FR)**

(54) ## Convertisseur optique de format NRZ-RZ

(57) Convertisseur d'un signal NRZ de durée de bit T comprenant une structure (10) interférométrique à deux bras (9,11) équipés d'un milieu (13,15) dont l'indice est une fonction de la puissance optique traversant ledit milieu. Le signal NRZ à convertir est introduit sur chacun des bras (9,11). Le signal en sortie (7) de la structure est réintroduit au travers d'un moyen (16) de retard de T/2 dans l'un des bras (11).

Le signal présent en sortie (7) est alors le signal NRZ convertit au format RZ.

FIG. 1

EP 1 158 352 A2

## Description

### Domaine de l'invention

L'invention se situe dans le domaine des convertisseurs "tout optique" pour convertir un signal entrant au format NRZ en un signal de sortie RZ. Elle concerne aussi un procédé de conversion.

### Arrière plan technologique

Les systèmes de transmission de données tout optique, en particulier les réseaux de transmission multiplexées par séparation en longueur d'onde (wavelength division multiplexed network WDM) utilisent différentes modulations et différents formats de données. Deux formats standards de données sont assez répandus. Ce sont les formats dits sans retour à zéro (Non Return to Zero - NRZ) et les formats avec retour à zéro (Return to Zero - RZ). Comme expliqué par exemple page 359 du manuel intitulé "Optique et Télécommunication - Transmission et traitement optique de l'information" par A. COZANET et al- publié chez EYROLLES, 1983 - dans un système sans retour à zéro un niveau "un" est transmis par un niveau haut pendant toute la durée du temps de transmission du bit, et un "zéro" est transmis par un niveau bas pendant cette même durée ; dans un système avec retour à zéro un "un" est transmis par un niveau haut pendant une partie, en général la première moitié du temps de transmission du bit puis un niveau bas ensuite, un "zéro" est transmis par un niveau bas pendant toute la durée du bit.

On voit par cette simple description, que le nombre d'impulsions transmis pour un ensemble de données sera plus important pour un format RZ que pour un format NRZ. En effet, dans un format NRZ une succession continue de "un" se traduit par un signal au niveau haut pendant toute la durée de transmission de cette succession, soit une seule impulsion longue.

Dans le format avec retour à zéro, une succession de "un" se traduira par une succession d'impulsions. De même un "un" isolé se traduira, en supposant que le temps bit soit de même durée pour les deux formats, par une impulsion de durée moitié pour le format RZ par rapport à la durée de l'impulsion du format NRZ, donc nécessitant pour sa transmission une plus grande largeur de bande passante.

Pour toutes ces raisons, la largeur de bande passante nécessaire pour transmettre à la même vitesse des données au format RZ et les mêmes données du format NRZ est plus que double dans le cas du format RZ.

On voit donc que le format NRZ présente un avantage certain, sur d'autres formats plus gourmands en largeur de bande pour une même vitesse de transmission.

Cependant, le format RZ est également intéressant dans certaines applications, par exemple le multiplexage, démultiplexage par division passive du temps, la génération soliton, et la suppression de la dispersion stimulée de BRILLOUIN.

C'est pourquoi, pour profiter des avantages de chaque format des convertisseurs d'un format dans un autre sont nécessaires.

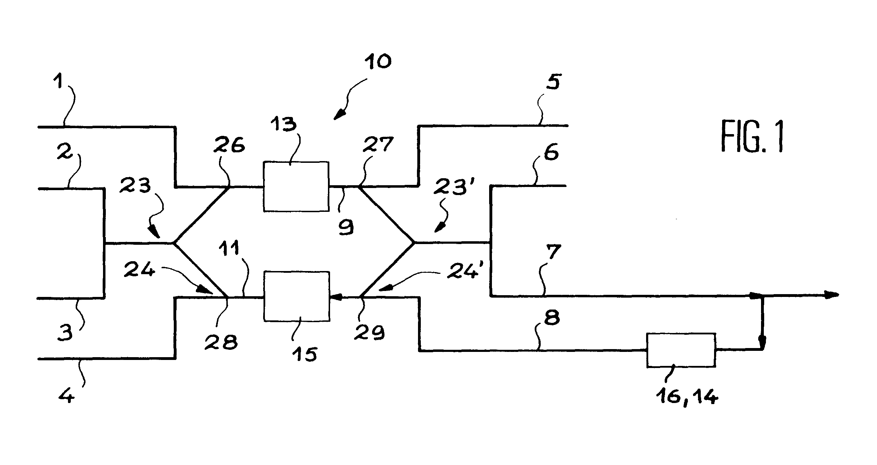

Un premier exemple connu de réalisation d'un tel convertisseur est décrit succinctement par exemple dans un article de "Electronics Letters" du 13 février 1992 (vol. 28, n° 4, pages 405, 406) ayant pour auteurs A. D. Ellis et D.A. Cleland et intitulé "Commutation tout optique ultra rapide dans un miroir boucle optique non linéaire (NOLM)". Comme représenté à la figure 1 de cet article, le dispositif comporte un interféromètre antirésonant de SAGNAC.

L'interféromètre reçoit d'une part un train régulier d'impulsions et d'autre part un signal au format sans retour à 0 représentatif d'un signal de données.

Le niveau des puissances des deux signaux sont choisis de telle sorte que si un seul des signaux est présent, c'est-à-dire est au niveau haut, une interférence destructive se produit en sorte que le niveau du signal présent en sortie de l'interféromètre est bas, ce qui correspond au fonctionnement normal d'un interféromètre de SAGNAC, compte tenu du retard de phase entre le signal en sens direct et le signal en sens inverse résultant du caractère biréfringent de la fibre. Par contre, lorsque les deux signaux sont au niveau haut, ce qui a pour effet de doubler la puissance optique totale, une phase additionnelle de $\pi$ est provoquée par modulation du signal haute puissance se propageant en sens inverse et donc par une interférence constructive à la sortie de l'interféromètre.

Le dispositif se conduit ainsi comme une porte "et".

Selon la bande passante d'un filtre placé en sortie de l'interféromètre on peut obtenir un signal RZ résultant de la conversion du signal NRZ soit sur une porteuse à la longueur d'onde portant le train d'impulsions, soit à la longueur d'onde portant le signal NRZ.

Un second mode de réalisation d'un convertisseur NRZ - RZ est décrit dans un article de S. BIGO, E. DESURVIRE, S. GAUCHARD et E. BRUN intitulé "Amélioration de débit par conversion optique NRZ - RZ et multiplexage par division temporelle passive pour les systèmes à transmission soliton", paru dans le journal "Electronics Letters" du 9 juin 1994 (vol. 30, n° 12, pages 984, 985). Dans ce qui suit, on ne s'intéressera qu'à la conversion NRZ - RZ, décrite dans cet article. Comme dans le cas précédent il est utilisé un miroir en boucle optique non linéaire. Comme dans le cas précédent également, deux signaux sont introduits dans la boucle formant interféromètre de SAGNAC. Il est introduit d'une part, un signal de contrôle à une longueur d'onde λc et, d'autre part, un signal NRZ à la longueur d'onde λs. Un contrôleur de polarisation de l'interféromètre est réglé de façon à minimiser le signal de sortie lorsque le signal de contrôle est bas de façon à obtenir un interféromètre de SAGNAC. Après amplification, le signal de contrôle est introduit dans la boucle formant interféromètre au travers d'un coupleur 80/20 situé près du point de partage entre l'onde directe et l'onde inverse.

Les auteurs rapportent qu'avec cette boucle passive, c'est-à-dire ne comprenant pas, comme dans l'exemple précédent, d'amplificateur optique dans la boucle, ils obtiennent un signal RZ résultant de la conversion du signal NRZ entré.

La largeur des impulsions du signal RZ est légèrement inférieure à la largeur des impulsions de contrôle à la longueur d'onde λc.

Par contre, la différence de niveau entre niveau bas et niveau haut est de plus de 20 dB représentant une amélioration de facteur 10 par rapport à l'exemple précédent avec boucle active.

On note que dans les deux exemples décrits ci-dessus, les miroirs à boucle de fibre sont très sensibles à la polarisation de la lumière et aux fluctuations de température.

Un troisième exemple de réalisation est mentionné dans un article de David NORTE et Allan E. WILLNER intitulé "Démonstration expérimentale d'une conversion tout optique entre des données aux formats RZ et NRZ incorporant des changements non inverseurs de longueur d'onde et conduisant à une transparence du format", paru dans "IEEE photonics technology letters" (vol. n° 8, n° 5 - mai 1996, pages 712-714).

Le dispositif mentionné dans cet article concerne un convertisseur RZ - NRZ dont un schéma est représenté en figure 1 de cet article. La description du dispositif et de son fonctionnement sont rendus peu clairs par le fait qu'un amplificateur optique SOA1 mentionné dans le texte n'est pas représenté sur la figure. On comprend toutefois qu'il faut tout d'abord effectuer une récupération du signal d'horloge du signal RZ. Il est également expliqué qu'un dispositif non décrit permet de passer d'un format NRZ à un format RZ en sorte que l'on peut disposer de l'un ou de l'autre format.

Chacun des dispositifs décrits ou mentionnés dans ces articles sont des sous-systèmes qui incluent plusieurs dispositifs optoélectroniques ou électroniques et nécessitent des travaux d'assemblage. Comme signalé plus haut, ceux à base d'interféromètres de SAGNAC sont sensibles aux fluctuations de température ou de polarisation de lumière. Tous les dispositifs décrits dans ces articles nécessitent un signal d'horloge ou une récupération d'horloge.

Il existe donc un besoin pour un dispositif de conversion NRZ - RZ qui soit simple de conception et fabrication.

**Brève description de l'invention**

L'idée à la base de l'invention est d'utiliser une structure interférométrique par exemple de Mach-Zehnder ayant deux bras, un premier et un second. L'un au moins des premier et second bras comporte un élément dont l'indice optique peut varier en fonction de la puissance optique présente dans cet élément, par exemple un amplificateur optique à semi-conducteur (SOA).

On injecte un signal NRZ (Se), sur une entrée de l'interféromètre, de sorte que ce signal se distribue dans chacun des bras de l'interféromètre de manière équilibrée. Si aucun signal de contrôle n'est introduit dans un bras dont l'indice varie avec la puissance optique, le signal d'entrée (Se) se retrouve inchangé sur l'une des sorties de l'interféromètre. Si par contre on introduit dans ce bras de l'interféromètre un signal de contrôle (Sc), et si le niveau de ce signal de contrôle (Sc) est bien choisi on peut obtenir dans l'élément dont l'indice optique peut varier en fonction de la puissance optique présente dans cet élément un changement d'indice exactement égal à la quantité nécessaire pour mettre les signaux optiques issus des deux bras de l'interféromètre en opposition de phase, c'est à dire avec un déphasage de $(2k+1)\pi$ l'un par rapport à l'autre. Dans cette configuration instantanée, les deux signaux issus du signal d'entrée (Se) présents dans chacun des bras de l'interféromètre se détruisent à la sortie de l'interféromètre. Pour le signal d'entrée (Se) l'interféromètre se comporte donc comme une porte optique dont l'ouverture est commandée par un signal de contrôle (Sc). Selon l'invention, on utilise ce phénomène pour réaliser la conversion d'un signal au format NRZ en signal au format RZ, sans utiliser de signal optique d'horloge. Pour cela on introduit dans l'un des bras de la structure, le signal présent en sortie de l'interféromètre en lui impartissant un retard temporel sensiblement égal à la moitié du temps bit du signal NRZ. Le signal de sortie retardé sert ainsi de signal de contrôle pour fermer ou ouvrir la porte optique décrite ci-dessus. Le retard temporel permet d'enlever temporellement de la puissance optique dans le signal de sortie de l'interféromètre. On obtient ainsi comme cela sera vu plus en détail plus loin un signal de sortie correspondant au signal d'entrée mais au format RZ.

Ainsi, l'invention est-elle relative à un convertisseur d'un signal NRZ, ayant une durée de bit T, en un signal RZ, caractérisé en ce qu'il comprend :

-    une structure interférométrique ayant deux bras, un premier et un second, chacun des bras ayant deux extrémités, une première et une seconde, l'un au moins des bras de l'interféromètre comportant un milieu dont la valeur de l'indice optique est variable en fonction de la puissance optique traversant ledit milieu, cette structure interférométrique ayant au moins une entrée et au moins une sortie

- l'une des entrée étant destinée à recevoir le signal NRZ à convertir, l'une des sorties portant un signal résultant d'une interférence entre un signal présent dans le premier bras et un signal présent dans le second bras : le convertisseur comprenant en outre
- des moyens de couplage pour coupler à une sortie de la structure interférométrique, et un bras de ladite structure comportant le milieu dont la valeur de l'indice optique est variable en fonction de la puissance optique.
- des moyens de retard disposés entre ladite sortie de la structure interférométrique et lesdits moyens de couplage, lesdits moyens de retard provoquant un retard sensiblement égal à T/2.

De préférence, les milieux actifs dont l'indice de réfraction est sensible à la puissance qui les traverse, sont constitués par des couches actives d'amplificateur optique à semi-conducteur.

Pour les grandes vitesses de transmission, le temps bit est très court, de l'ordre de quelques dizaines de picosecondes et le retard apporté au signal de sortie réintroduit dans l'un des bras pourra être réalisé au moyen par exemple d'un guide optique intégré sur un substrat de l'interféromètre ou d'un composant, par exemple un amplificateur optique, ayant aussi pour fonction d'ajuster le niveau du signal de sortie avant sa réintroduction dans l'un des bras de la structure interférométrique.

Le signal en sortie de la structure interférométrique pourra être introduit sur l'extrémité du bras de la structure recevant également le signal NRZ à convertir en sorte que les deux signaux se propagent dans ce bras dans la même direction. Dans ce cas, il sera préférable de convertir en longueur d'onde le signal en sortie de la structure pour éviter des interférences entre ces deux signaux se produisant dans ledit bras.

Le signal en sortie de la structure interférométrique pourra aussi être introduit sur une extrémité du bras de la structure qui est opposée à celle recevant le signal NRZ. Dans ce cas, il sera possible ou non de convertir en longueur d'onde, le signal en sortie de la structure interférométrique avant son introduction dans ledit bras de la structure.

De préférence, en l'absence d'un signal provenant de la sortie de la structure, les trajets optiques des deux bras de la structure sont égaux, provoquant ainsi une interférence constructive entre des signaux présents dans chacun des bras.

De préférence, des moyens placés entre la sortie de la structure et l'un des bras ajustent le niveau de puissance optique du signal présent en sortie de façon à modifier le chemin optique de l'un des bras par rapport à l'autre pour obtenir une interférence destructive.

L'invention est également relative à un procédé de conversion d'un signal au format NRZ ayant une durée de bit T en un signal au format RZ caractérisé en ce que :

- on introduit le signal à convertir dans chacun des bras d'une structure interférométrique, chacun des bras de la structure comportant un milieu optique dont la valeur d'indice est variable en fonction de la puissance optique traversant ledit milieu,
- on introduit sur l'un des bras seulement de ladite structure un signal présent en sortie de ladite structure en le retardant de la valeur d'une demi durée de bit environ,
- on recueille le signal RZ résultant de la conversion du signal NRZ sur ladite sortie.

**Brève description des dessins**

Des exemples de réalisation de l'invention seront maintenant décrits en regard des dessins annexés dans lesquels des références identiques désignent des éléments ayant même fonction. Dans ces dessins :

- La figure 1 représente schématiquement un premier exemple de réalisation de l'invention, dans lequel le signal de sortie est réintroduit sur un bras de la structure à une extrémité de ce bras opposée à l'extrémité d'entrée du signal NRZ dans ce bras,
- la figure 2 représente des niveaux de signaux dans le temps. Elle comporte les parties A, B et C. La partie A représente un signal NRZ, la partie C représente un signal fictif qui serait présent en sortie de la structure interférométrique en l'absence d'un moyen de retard et la partie B représente le signal RZ résultant de la conversion du signal NRZ, représenté en partie A,
- la figure 3 représente un exemple de réalisation dans lequel le signal de sortie est convertit en longueur d'onde et introduit sur la même extrémité du bras de la structure que l'extrémité recevant le signal NRZ, et
- la figure 4 représente le même exemple de réalisation que celui de la figure 3, mais avec un exemple de réalisation de convertisseur en longueur d'onde.

**Description d'exemples de réalisation**

La figure 1 représente de façon schématique un premier exemple de réalisation d'un convertisseur NRZ - RZ selon l'invention.

Ce convertisseur utilise une structure interférométrique 10, en elle-même connue, qui sera décrite ci-après. Cette structure se présente de façon symétrique et a deux entrées de contrôle 1, 4 avec leurs symétriques 5, 8, deux entrées de signal 2-3 avec leurs symétriques en sortie 6-7. Les entrées 2 et 3 sont couplées à chacun des bras 9, 11 de la structure.

Chacun des bras a deux extrémités, une première 26, 28 respectivement et une seconde 27, 29 respectivement.

Dans les exemples de réalisation de l'invention, les entrées 2, 3 sont tout d'abord couplées entre elles, puis séparées et couplées comme représenté sur les figures 1, 3, et 4 à chacun des bras 9, 11. Ces moyens de couplage constituant le couplage d'entrée à chacun des bras 9, 11 ont été repérés par la référence 23. Ils constituent un coupleur 2 vers 2. De façon symétrique côté sortie, les moyens de couplage sont constitués d'un autre coupleur 2 vers 2 repéré 23'.

Les entrées de contrôle 1, 4 sont chacune couplées à l'un des bras 9, 11 en sorte qu'un signal introduit sur ces bras par ces entrées se propage dans le bras de la première à la seconde extrémité de ce bras.

De même, les entrées de contrôle 5, 8 sont chacune couplée à l'un des bras 9, 11 respectivement. Les signaux entrés par l'entrée de contrôle 5 par exemple se propagent de la seconde extrémité 27 du bras 9 à la première extrémité 26 de ce bras. Dans les exemples représentés figures 1, 3 et 4 on n'utilise que les entrées de contrôle 4 et 8. Seules les moyens de couplage de ces entrées à chacune des extrémités 28, 29 respectivement du bras 11 ont été référencées 24 et 24' respectivement.

Chacun des bras 9, 11 est équipé d'un milieu optique 13, 15 d'indice variable avec la puissance optique le traversant, sous la forme d'une couche active d'un amplificateur à semi-conducteur.

Le niveau de sortie d'une telle structure en fonction des niveaux de signaux présents sur les entrées de signal et les entrées de contrôle est représenté par les tableaux ci-après :

| niveau de l'entrée de contrôle 4 ou 8 | 0 | 0 | 1 | 1 |
|---|---|---|---|---|
| niveau de l'entrée de signal 2 | 0 | 1 | 0 | 1 |
| niveau de sortie 7 | 0 | 1 | 0 | 0 |
|  |  |  |  |  |
| niveau de l'entrée de contrôle 1 ou 5 | 0 | 0 | 1 | 1 |
| niveau de l'entrée de signal 3 | 0 | 1 | 0 | 1 |
| niveau de sortie 6 | 0 | 1 | 0 | 0 |

Le principe de fonctionnement du dispositif est résumé dans les deux tables de vérité ci-dessus. Sans signal de contrôle - c'est-à-dire niveau de l'entrée de contrôle à 0 - le signal présent à l'entrée 3 est reproduit à la sortie 6. Lorsque le signal de contrôle est au niveau haut, c'est-à-dire à la valeur 1, un signal d'entrée au niveau 0 ou au niveau 1 est transformé en un signal de sortie au niveau 0.

Dans la suite de l'exposé on admettra que l'entrée de signal est l'entrée 2, et l'entrée de contrôle, l'une des entrées 4 ou 8 couplée à la première ou à la seconde extrémité du bras 11 respectivement.

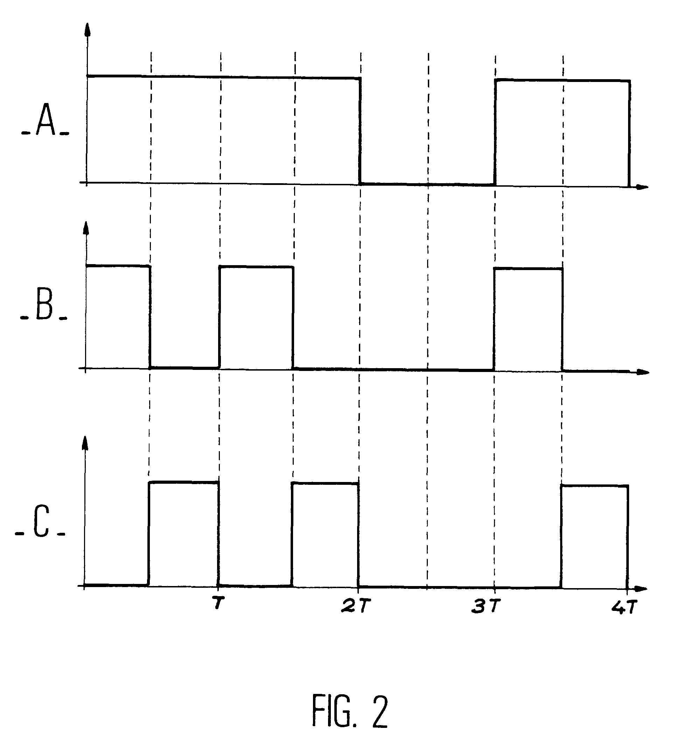

Cela se traduit par une transformation du signal d'entrée telle que représenté figure 2.

Cette figure comporte trois parties A, B et C. La partie A représente les variations dans le temps du niveau d'un signal NRZ dont la durée du temps bit est T. On suppose qu'un tel signal est entré sur l'entrée 2.

On suppose que sur l'entrée de contrôle 4 ou 8 on introduit le signal présent sur la sortie 7, retardé d'une valeur T/2, c'est-à-dire de la demi-durée du bit. Ce signal fictif est représenté en partie C. On obtient dans ces conditions sur la sortie 7, le signal NRZ convertit en RZ comme représenté sur la figure 1 partie B. La transformation NRZ-RZ est ainsi auto entretenue.

Sur la figure 1, on a représenté un mode de réalisation dans lequel un signal NRZ est entré sur l'entrée 2 et traverse les bras 9 et 11 de leurs premières 26, 28 à leurs secondes extrémités 27, 29 respectivement.

Le signal en sortie 7 est réinjecté sur l'entrée de contrôle 8 avec un temps de retard égal à une demi-période de temps bit T. Il convient de noter que si, par exemple, le débit est égal à 10 Gigabits, le temps de bit est de $10^{-10}$ secondes soit 100 picosecondes. Dans ces conditions, un retard de T/2 est de 50 picosecondes. Un tel retard peut être obtenu avec un cm de fibre optique seulement ou avec un guide en InP long de 5 mm.

De préférence le signal présent en sortie 7 est réamplifié de façon à être mis à un niveau convenable pour obtenir un niveau proche de la saturation du milieu 15 optique actif de l'amplificateur présent sur le bras 11.

Dans ce cas, un amplificateur optique 14 qui reçoit le signal optique en sortie 7 de signal est utilisé à la fois comme amplificateur 14 et comme moyen de retard 16 de T/2.

Dans le mode de réalisation représenté figure 1, le signal de retour, retardé de T/2 est introduit sur l'entrée de contrôle 8 en sorte que ce signal se propage dans ce bras en sens inverse du signal NRZ introduit sur l'entrée 2. Ce signal réintroduit se propage donc de la seconde 29 à la première 28 extrémité du bras 11.

Dans ces conditions, bien qu'étant à la même longueur d'onde, le signal de retour n'interfère pas avec le signal NRZ à transformer. Il ne fait que changer aux moments opportuns le niveau de puissance présent dans le milieu actif 15 de l'amplificateur optique du bras 11. Le signal RZ converti se trouve sur une porteuse à la même longueur d'onde que le signal NRZ d'entrée.

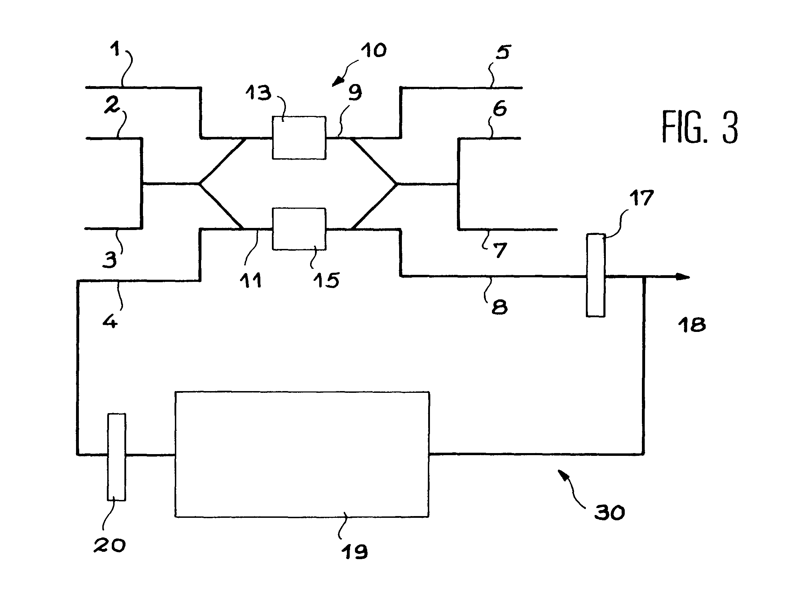

La figure 3 représente un mode de réalisation de l'invention présentant l'avantage de pouvoir changer la longueur d'onde du signal de contrôle du niveau de puissance traversant l'amplificateur optique 15.

Le dispositif représenté figure 3 comporte un dispositif 10 tel que représenté figure 1 comportant les éléments désignés par les références 1-9, 11-13 et 15, 23-24'.

La sortie 7 débouche sur un filtre 17. Le signal en sortie du filtre 17 alimente une boucle de retour 30 comportant un convertisseur 19 de longueur d'onde, qui alimente de préférence au travers d'un filtre passe bande 20 l'entrée de contrôle 4. De préférence, le convertisseur 19 comporte des moyens pour régler le niveau de sortie de ce convertisseur.

L'avantage d'un tel convertisseur est que le signal de contrôle n'interfère pas avec le signal d'entrée.

Le filtre 17 en sortie 7 du dispositif 10 est un filtre passe bande centré sur la longueur d'onde porteuse du signal NRZ.

Le filtre 20 en sortie du convertisseur 19 est un filtre passe-bande centré sur la longueur d'onde du signal de contrôle générée ou reçue par le convertisseur 19.

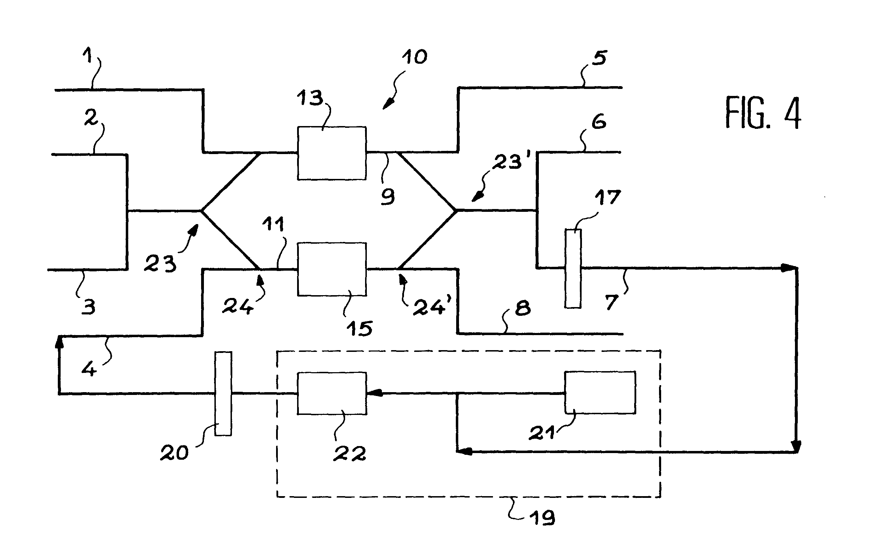

On a représenté en figure 4, un exemple de réalisation du convertisseur 19 de longueur d'onde.

La génération de l'onde à la longueur d'onde de contrôle est effectuée par exemple au moyen d'une diode laser 21. Le signal en sortie, de la diode 21 sous forme d'une onde continue non modulée est couplé au signal en sortie du filtre 17 et les deux signaux sont introduits dans un amplificateur optique à semi-conducteur 22 ayant un milieu actif sensible à la puissance optique le traversant. Dans ces conditions, si la puissance d'entrée de chacun des signaux entrant dans l'amplificateur 22 est telle que l'on atteigne la valeur de saturation lorsque la valeur du signal modulé en provenance du filtre 17 est haute, alors l'onde continue en provenance de la diode 21 est modulée comme ce signal. Il convient, comme indiqué plus haut, de régler le temps de transit dans le convertisseur 19 pour qu'il soit sensiblement égal à T/2.

Sur les figures 3 et 4 on a représenté le dispositif selon l'invention avec la sortie du convertisseur 19 couplé à la première extrémité 28 du bras 11. Naturellement, il est également possible de la coupler à la seconde extrémité 29, en sorte que le signal NRZ et le signal de contrôle se propagent en sens inverse.

Il convient aussi de comprendre que dans l'invention, ce qu'on appelle le signal de contrôle est aussi le signal de sortie, c'est-à-dire le signal RZ résultant de la conversion du signal NRZ.

Afin de faciliter la conception d'un convertisseur, il est rappelé ci-après en annexe, les formules admises relativement au fonctionnement des amplificateurs optiques à semi-conducteur.

ANNEXE

Equations relatives au fonctionnement des amplificateurs optiques à semi-conducteur.

1) <u>Amplificateur travaillant sous la puissance de saturation</u>

Le gain $G_0$ avant la saturation de l'amplificateur est donné par la formule

$$G_0 = e^{(g_0 L)}$$

dans laquelle $g_0$ est un coefficient et L est la longueur optique du milieu actif.

La phase $\Phi$ apportée par l'amplificateur travaillant sous la puissance de saturation est

$$\Phi = -\frac{\alpha}{2} L_n(G_0)$$

dans laquelle $\alpha$ est le coefficient de Henry du milieu actif laser de l'amplificateur et $L_n$ est la fonction Logarithme

népérien.

2) <u>Amplificateur travaillant à saturation</u>

Le gain G à saturation est donné par :

$$G = e^{\left(\frac{g_0 L}{1 + P / P_S}\right)}$$

dans laquelle

P représente la puissance "en entrée" de l'amplificateur,
$P_s$ représente la puissance de saturation
L représente la longueur du milieu actif.

Le déphasage est donné par :

$$\Phi = - \frac{\alpha}{2} L_n(G)$$

3) <u>Fonction de transfert de la structure 10</u>

Les fonctions de transfert $H_{D_0}$ et $H_{D_1}$ sont données par les formules :

$$H_{D_0} = \frac{P_{D_0}}{P_{A_0}} = \left|\left[\frac{D_0}{A_0}\right]_{A_1=0}\right|^2 = G_1 \cos^2 K_1 \cos^2 K_2 + G_2 \sin^2 K_1 \sin^2 K_2$$
$$- 2\sqrt{G_1 G_2} \cos K_1 \cos K_2 \sin K_1 \sin K_2 \cos \Delta\Phi$$

et

$$H_{D1} = \frac{P_{D1}}{P_{A_0}} = \left|\left[\frac{D1}{A_0}\right]_{A_1=0}\right|^2 = G_1 \cos^2 K_1 \sin^2 K_2 + G_2 \sin^2 K_1 \cos^2 K_2$$
$$+ 2\sqrt{G_1 G_2} \cos K_1 \cos K_2 \sin K_1 \sin K_2 \cos \Delta\Phi$$

dans lesquelles :

$P_{D_0}$ est la puissance optique en sortie du bras 6, (figure 1),
$P_{D1}$ est la puissance optique en sortie du bras 7,
$P_{AO}$ est la puissance optique appliquée au bras d'entrée 2,
$D_0$ est le champ optique en sortie 6,
$D_1$ est le champ optique en sortie du bras 7,
$A_0$ est le champ optique à l'entrée 2,
$A_1$ est le champ optique à l'entrée 3 (par exemple 3, figure 1),
$G_1$ est le gain de l'amplificateur par exemple 13,
$G_2$ est le gain de l'autre amplificateur 15,
$K_1$ et $K_2$ sont pour les amplificateurs 13 et 15 respectivement des valeurs de coefficient résultant de le formule :

$$K = \frac{2\pi}{\lambda} L$$

dans laquelle

$\lambda$ désigne la longueur d'onde d'une onde traversant le milieu,

enfin

$$\Delta\Phi = \Phi_2 - \Phi_1 = -\frac{\alpha}{2} L \frac{G_2}{G_1}$$

Il est supposé ici que les coefficients de Henry des deux milieux actifs 13 et 15 sont égaux. En général.

**Revendications**

1.   Convertisseur d'un signal NRZ ayant une durée de bit T, en un signal RZ, **caractérisé en ce qu'**il comprend :

   -   une structure (10) interférométrique ayant deux bras (9,11), un premier (9) et un second (11), chacun des bras ayant deux extrémités, une première (26,28) et une seconde (27,29) et l'un au moins des bras (9,11) comportant un milieu (13,15) dont la valeur de l'indice optique est variable en fonction de la puissance optique traversant ledit milieu (13,15), cette structure interférométrique ayant au moins une entrée et au moins une sortie, l'une des entrée (2) de la structure (10) étant destinée à recevoir le signal NRZ à convertir, l'une des sorties (7) portant un signal résultant d'une interférence entre un signal présent dans le premier bras (9) et un signal présent dans le second bras (11) :
   -   le convertisseur comprenant en outre
   -   des moyens (24, 24') de couplage pour coupler ladite sortie (7) de la structure (10) interférométrique à un bras (11) de ladite structure (10) comportant le milieu dont l'indice optique est variable avec la puissance optique, et
   -   des moyens de retard (19,16,14) disposés entre ladite sortie (7) de la structure interférométrique (10) et lesdits moyens (24,24') de couplage, lesdits moyens (19,16,14) de retard provoquant un retard sensiblement égal à T/2.

2.   Convertisseur selon la revendication 1, **caractérisé en ce que** le ou les milieux (13,15) dont la valeur de l'indice optique est variable en fonction d'une valeur de puissance optique les traversant sont constitués par les couches actives d'amplificateurs optiques (13,15).

3.   Convertisseur selon l'une des revendications 1 ou 2, **caractérisé en ce que** le moyen de retard entre ladite sortie (7) de la structure interférométrique (10) et l'un des bras (11) de ladite structure comporte un amplificateur optique (14,16).

4.   Convertisseur selon l'une des revendications 1 à 3, **caractérisé en ce que** les moyens (24') de couplage sont disposés à une extrémité (29) dudit bras (11) opposée à une extrémité (28) recevant le signal à convertir.

5.   Convertisseur selon la revendication 4, **caractérisé en ce qu'**un premier filtre (17) est présent en aval de ladite sortie (7) de la structure interférométrique (10) et en amont d'un convertisseur (19) de longueur d'onde et **en ce qu'**un second filtre (20) est présent entre une sortie du convertisseur (19) de longueur d'onde et ledit coupleur (24,24')

6.   Convertisseur selon l'une des revendications 1 à 3, **caractérisé en ce que** les moyens (24) de couplage sont disposés à la même extrémité (28) dudit bras (11) de la structure (10) recevant le signal NRZ à convertir en sorte que le signal de sortie de ladite structure (10) et le signal NRZ à convertir se propagent dans le même sens.

7.   Convertisseur selon la revendication 6, **caractérisé en ce qu'**un convertisseur (19) de longueur d'onde est inséré entre la sortie (7) de ladite structure et le coupleur (24).

8.   Convertisseur selon la revendication 1, **caractérisé en ce qu'**en l'absence d'un signal provenant de la sortie (7) de la structure (10), les trajets optiques des deux bras (9,11) de la structure (10) sont égaux, provoquant ainsi une interférence constructive entre des signaux présents dans chacun des bras.

**9.** Convertisseur selon la revendication 1 ou 2, **caractérisé en ce que** des moyens (14, 16, 24'-17, 30), placés entre la sortie (7) de la structure (10) et l'un des bras (9, 11) ajustent le niveau de puissance optique du signal présent en sortie (7) de façon à modifier le chemin optique de l'un des bras (9, 11) par rapport à l'autre pour obtenir une interférence destructive.

**10.** Procédé de conversion d'un signal au format NRZ ayant une durée de bit T en un signal au format RZ **caractérisé en ce que** :

- on introduit le signal à convertir dans chacun des bras d'une structure interférométrique, chacun des bras de la structure comportant un milieu optique dont la valeur d'indice est variable en fonction de la puissance optique traversant ledit milieu,
- on introduit sur l'un des bras seulement de ladite structure un signal présent sur une sortie de ladite structure en le retardant environ de la valeur d'une demi durée de bit,
- on recueille le signal RZ résultant de la conversion du signal NRZ sur ladite sortie.

**11.** Procédé de conversion d'un signal selon la revendication 10, **caractérisé en ce que** le signal présent en sortie de structure est introduit dans ledit bras de telle sorte que son sens de propagation soit inverse du sens de propagation du signal NRZ à convertir.

**12.** Procédé selon la revendication 10, **caractérisé en ce qu'**on convertit en longueur d'onde le signal présent en sortie de la structure interférométrique et **en ce qu'**on introduit le signal converti en longueur d'onde dans ledit bras de la structure de telle sorte que son sens de propagation soit le même que celui du signal NRZ à convertir.

FIG.1

FIG. 2

FIG. 3

FIG. 4